# EUROPEAN PATENT SPECIFICATION

(11) **EP 3 281 726 B1**
(45) Date of publication and mention of the grant of the patent: **15.05.2019**
(21) Application number: 16183393.4
(22) Date of filing: 09.08.2016
(51) Int. Cl.: B22F 3/105, B33Y 30/00, B33Y 50/02, B29C 64/393, B29C 64/153, B29C 64/371

(54) **APPARATUS FOR PRODUCING A THREE-DIMENSIONAL WORKPIECE WITH TEMPERATURE-CONTROLLED SHIELDING GAS**
VORRICHTUNG ZUR HERSTELLUNG EINES DREIDIMENSIONALEN WERKSTÜCKS MIT TEMPERATURGESTEUERTEM SCHUTZGAS
APPAREIL DE PRODUCTION D'UNE PIÈCE TRIDIMENSIONNELLE À L'AIDE D'UN GAZ DE PROTECTION À TEMPÉRATURE CONTRÔLÉE

(43) Date of publication of application: 14.02.2018
(73) Proprietor: SLM Solutions Group AG, 23560 Lübeck (DE)
(72) Inventor: Hoppe, Birk, 23560 Lübeck (DE); Mutz, Felix, 23560 Lübeck (DE); Schwarze, Dieter, 23560 Lübeck (DE); Krol, Toni Adam, 23560 Lübeck (DE)
(74) Representative: Schicker, Silvia

(56) References cited:
- WO-A1-92/08592
- WO-A1-2014/189109
- WO-A1-2016/102970
- US-A1- 2016 214 318

## Description

The present invention relates to an apparatus for producing a three-dimensional workpiece by irradiating layers of a raw material powder with electromagnetic or particle radiation. Furthermore, the invention relates to a method for operating an apparatus of this kind and to a shielding gas control system for such an apparatus.

Powder bed fusion is an additive layering process by which pulverulent, in particular metallic and/or ceramic raw materials, can be processed to three-dimensional workpieces of complex shapes. To that end, a raw material powder layer is applied onto a carrier and subjected to laser radiation in a site selective manner in dependence on the desired geometry of the workpiece that is to be produced. The laser radiation penetrating into the powder layer causes heating and consequently melting or sintering of the raw material powder particles. Further raw material powder layers are then applied successively to the layer on the carrier that has already been subjected to laser treatment, until the workpiece has the desired shape and size. Selective laser melting or laser sintering can be used in particular for the production of prototypes, tools, replacement parts or medical prostheses, such as, for example, dental or orthopaedic prostheses, on the basis of CAD data.

It is further known to provide shielding gas to the process chamber of an apparatus of this kind to protect the irradiated area from undesired reactions with the surrounding atmosphere and, typically, from reactions with oxygen. Suitable shielding gases may be inert or semi-inert gases.

A further relevant parameter is the temperature within the process chamber of a respective apparatus. EP 2 859 973 A1 describes a powder processing arrangement for use in an apparatus for producing three-dimensional workpieces by selectively irradiating a raw material powder with electromagnetic or particle radiation, wherein a carrier element comprises a build section adapted to carry a raw material powder layer while being selectively irradiated with electromagnetic or particle radiation and at least one transfer section adapted to carry a raw material powder layer prior to being selectively irradiated with electromagnetic or particle radiation. A heating device is adapted to pre-heat the raw material powder carried by the transfer section of the carrier element prior to being applied to the build section of the carrier element so as to form the raw material powder layer to be selectively irradiated with electromagnetic or particle radiation.

Further, EP 2 878 409 A1 discloses a method and a device for controlling an irradiation system for use in an apparatus for producing a three-dimensional workpiece and comprising a first and the second irradiation unit. A first and a second irradiation area are defined on a surface of the carrier adapted to receive a layer of raw material powder. A layer of raw material powder applied onto the carrier in the first irradiation area is irradiated by the first irradiation unit, wherein the operation of the first irradiation unit is controlled in such a manner that the raw material powder is preheated. Thereafter, the layer of raw material powder applied onto the carrier in the first irradiation area is irradiated by means of the second irradiation unit, wherein the operation of the second irradiation unit is controlled in such a manner that the raw material powder is heated to a temperature which allows sintering and/or melting of the raw material powder in order to generate a layer of the three-dimensional workpiece. While the first irradiation unit irradiates a layer of raw material powder applied onto the carrier in the first irradiation area, a layer of raw material powder applied onto the carrier in the second irradiation area is irradiated by the second irradiation unit. Furthermore, while the first irradiation unit irradiates a layer of raw material powder applied onto the carrier in the second irradiation area, a layer of raw material powder applied onto the carrier in the first irradiation area is irradiated by the second irradiation unit.

US 2016/214318 A1 discloses an apparatus and a method for manufacturing three-dimensional objects, in which a heating element having at least two functional openings is used to improve the manufacturing process and in particular to optimise heat input.

WO 2016/102970 A1 discloses an additive manufacturing apparatus comprising a gas flow circuit which is arranged such that cooled inert gas can be delivered into a build chamber.

WO 92/08592 A1 discloses an apparatus for fabricating parts by selective laser sintering including a baffle for directing gas at a target surface.

The invention is directed at the object of providing an apparatus for producing a three-dimensional workpiece by irradiating layers of a raw material powder with electromagnetic or particle radiation which allows the production of a particularly high-quality three-dimensional workpiece. Furthermore, the invention is directed at the object of providing a method for operating an apparatus of this kind.

This object is addressed by an apparatus as defined in claim 1 and a method as defined in claim 11.

An apparatus for producing a three-dimensional workpiece comprises a carrier being arranged in a process chamber of the apparatus and adapted to receive a layer of raw material powder. The carrier may be a rigidly fixed carrier. Preferably, however, the carrier is designed to be displaceable in vertical direction so that, with increasing construction height of a workpiece, as it is built up in layers from the raw material powder, the carrier can be moved downwards in the vertical direction.

The process chamber may be sealable against the ambient atmosphere, i.e. against the environment surrounding the process chamber, in order to be able to maintain a controlled atmosphere, in particular an inert atmosphere within the process chamber. The raw material powder to be received on the carrier preferably is a metallic powder, in particular a metal alloy powder, but may also be a ceramic powder or a powder containing different materials. The powder may have any suitable particle size or particle size distribution. It is, however, preferable to process powders of particle sizes < 100 µm.

The apparatus further comprises an irradiation device for selectively irradiating electromagnetic or particle radiation onto the raw material powder applied onto the carrier in order to produce the workpiece from said raw material powder by an additive layer construction method (i.e, irradiating predetermined irradiating sites to produce single workpiece layers). The irradiation device may be configured to heat the raw material powder upon irradiation to a specific temperature which allows a site-selective sintering and/or melting of the raw material powder in order to generate a layer of the three-dimensional workpiece. The apparatus may be configured to, in a generally known manner, carry out a cyclic process by adding a further layer of raw material onto the carrier, and specifically onto the just produced workpiece layer, after the irradiation device has completed producing a layer. Following that, the irradiation device can again perform site-selective irradiation to produce a further workpiece layer on top of the previous one. This can be repeated until the workpiece is completed.

The irradiation device may comprise a sintering/melting radiation source, such as a laser source, and at least one optical unit for guiding and/or processing a sintering/melting radiation beam emitted by the sintering/melting radiation source. The optical unit may comprise optical elements such as an object lens, in particular an f-theta lens, and a scanner unit, the scanner unit preferably comprising a diffractive optical element and a deflection mirror. The irradiation device may comprise only one irradiation unit or a plurality of irradiation units each being adapted to emit electromagnetic or particle radiation which allows a site-selective sintering and/or melting of the raw material powder from a sintering/melting radiation emission plane.

Still further, the apparatus comprises a shielding gas supply system adapted to supply a shielding gas to the process chamber. The shielding gas supply system may comprise a gas line or gas tube connected to an entry site at the process chamber.

Furthermore, the shielding gas supply system may comprise a gas flow generating device, such as a compressor, for supplying the shielding gas to the process chamber.

In one example, the shielding gas supply system comprises a shielding gas circuit for supplying shielding gas to the process chamber and also collecting shielding gas leaving said process chamber. The shielding gas circuit may comprise a line circuit connecting an entry site of the process chamber with an exit site thereof. In this context, the shielding gas circuit may further comprise a respective first section for supplying shielding gas to the process chamber and a second section for collecting shielding gas leaving the process chamber, said first and second section being connected by a connecting section which may comprise components such as a shielding gas reservoir or a gas flow generating device as previously discussed.

Finally, the apparatus further comprises a shielding gas control system that is adapted to control the temperature of the shielding gas. The shielding gas control system may comprise a control unit, and preferably an electronic control unit. Said control unit may be provided separately from or integrated into a central control unit of the apparatus. The control unit can be configured to provide control signals to existing actuators or control elements of the apparatus that are configured to act on the temperature of the shielding gas. Alternatively or in addition thereto, the shielding gas control system may comprise own actuators or control elements for influencing the temperature of the shielding gas. These may be controlled by a control unit of the apparatus, for example an existing central control unit, and/or by a separate control unit of the shielding gas control system as previously discussed.

The shielding gas control system can generally be configured to control the shielding gas temperature in a feed-forward manner. Also, the shielding gas control system may be configured to control the shielding gas temperature according to a feedback loop, i.e., actually regulating said temperature. This may involve providing at least one suitable temperature sensing means in the apparatus, e.g. close to or at an entry or exit site of the process chamber. In one example, the shielding gas control system is configured to selectively switch between feed-forward and feedback control depending, for example, on current operating conditions of the apparatus.

Furthermore, the gas control system may be configured to, e.g. by itself or in cooperation with the gas supply system, direct at least part of the stream of temperature-controlled shielding gas to an irradiation site of the irradiation device, i.e., to a currently produced workpiece layer. In this context, the gas control system may further be configured to adjust or regulate the stream direction of the temperature-controlled shielding gas in accordance with the ongoing production process, so as to maintain a stream of shielding gas along said irradiation site.

According to a preferred embodiment, the shielding gas control system is configured as a unit and/or module separate from the remainder of the apparatus. In this case, the unit or module may further be configured to be electronically connectable to an existing control unit and/or power supply of the apparatus. Overall, this can allow for easy retrofitting of existing devices.

In summary, the inventors have thus discovered that temperature management in existing apparatuses of the present kind is not sufficient for guaranteeing a high product quality. More precisely, the inventors have discovered that improper heating and/or cooling of the process chamber and, in particular, of the raw material powder accommodated therein or of the at least partially formed workpiece, may lead to problems such as creating a high temperature gradients within the workpiece. This may result in considerable internal stresses as well as varying material characteristics along the workpiece's height.

Specifically, the inventors have discovered that when using known carrier heating units, which are typically provided to counteract temperature gradients being formed in the workpiece, the temperature may significantly decrease from regions near said carrier to regions further away therefrom. In other words, with increasing build height of the workpiece relative to the carrier, the temperature gradient further increases especially when viewed in a vertical direction relative to the carrier. Consequently, workpiece regions near the carrier may be maintained at a comparatively high temperature, whereas workpiece regions near new layers being formed are comparatively cold.

The previously dicussed known additional heating devices for the raw material powder, however, increase the costs and complexity of the system and can still be insufficient for preventing the formation of significant temperature gradients. Similar considerations apply with regard to the known additional irradiation devices for pre-heating the raw material powder from above.

On the other hand, situations may arise in which a temperature gradient in the workpiece results from its geometry and the undesired accumulation of heat in certain areas. In this case, cooling may be required to avoid significant temperature gradients in the workpiece. Again, the inventors have discovered that known solutions are insufficient in this regard, in particular if simultaneous heating by means of a carrier heating device is to be maintained.

Therefore, in an attempt to improve product quality, the inventors have come up with an alternative solution for heating and/or cooling the process chamber and workpiece, said solution being based on the above described shielding gas control system. Specifically, the inventors have discovered that by adjusting the temperature of the shielding gas according to given needs, cheap and reliable heating and/or cooling can be achieved without having to substantially reconfigure existing apparatus designs. Also, this heating and/or cooling may be provided directly near or at the workpiece, since the shielding gas is typically supplied so as to stream along upper or new layers of said workpiece being formed.

Note that the temperature control of the shielding gas may also be used to heat/cool further components of a shielding gas circuit or of structures adjacent thereto. For example, the shielding gas circuit may comprise a filter device which serves to filter the particulate impurities from the shielding gas flowing though the shielding gas circuit prior to the shielding gas being recirculated to the process chamber. Accordingly, the temperature of said filter device may equally be controlled by means of the shielding gas and, preferably, said filter device can be cooled for protective purposes with help of the temperature-controlled shielding gas.

According to an example implementation, the shielding gas control system is further adapted to raise the temperature of the shielding gas. Accordingly, the shielding gas control system may be adapted to selectively heat the shielding gas. This way, the shielding gas may transfer additional heat to the surrounding when entering the process chamber and streaming along the raw material and workpiece layers accommodated therein. Specifically, the shielding gas may be heated to a temperature which is above the temperature of the workpiece or, at least, above the temperature of a region of the workpiece along which the shielding gas streams. Such a region may comprise an uppermost or currently produced layer of the workpiece. Note that the inventors have discovered that by pre-heating the shielding gas, product quality is further improved since remaining humidity in the process chamber can be removed. Such humidity may otherwise negatively impact the melting/sintering process.

Alternatively or in addition thereto, the shielding gas control system may be adapted to lower the temperature of the shielding gas. Accordingly, the shielding gas control system may be adapted to selectively cool the shielding gas. This way, the shielding gas may remove excess heat from its surrounding when entering the process chamber and streaming along the raw material and workpiece layers accommodated therein. Specifically, the shielding gas may be cooled to a temperature which is below the temperature of the workpiece or, at least, below the temperature of a region of the workpiece along which the shielding gas streams. Such a region may comprise an uppermost or currently produced layer of the workpiece.

Note that the gas control system can generally be configured to selectively switch between heating or cooling of the shielding gas depending on current needs, such as current operating states or process parameters of the apparatus and/or given workpiece parameters of the workpiece to be produced. Examples of such parameters will be discussed below.

According to embodiments as described herein, the shielding gas control system is adapted to control the temperature of the shielding gas prior to entering the process chamber. The shielding gas control system performs and/or initiates heating of the shielding gas at or close to an entry site of the shielding gas to said process chamber. This increases the chances of the shielding gas reaching a current production/irradiating site with a desired temperature due to the shortened travel distance.

Likewise, the shielding gas control system may be adapted to control the temperature of the shielding gas in the process chamber. This may be achieved, for example, by heating and/or cooling elements being provided in the process chamber and close to or at the entry and/or exit site thereto.

Still further, the shielding gas control system is adapted to control the temperature of the shielding gas after leaving the process chamber. The shielding gas control system performs and/or initiates cooling of the shielding gas at or close to an exit site of the shielding gas. This way, a large portion of the excess heat of the shielding gas can be collected directly after leaving the process chamber. Said heat is further used by a line circuit of the of the shielding gas control system as detailed below. Also, this limits the risk of undesired heating of adjacent components within the apparatus when guiding the shielding gas (e.g. in a respective line circuit) through the apparatus back to the entry site at the process chamber.

Note that the above described cooling and/or heating close to the exit and/or entry site may comprise limiting a travel distance of the shielding gas between the respective entry/exit site and a site of heating/cooling to not more than 2 meters, not more than 1 meter, not more than 60 centimeters or not more than 20 centimeters.

The shielding gas control system comprises first and second temperature control elements that are configured to act on the shielding gas to adjust the temperature thereof. Said temperature control element may comprise or be configured as a (thermal) actuator, such as a heater or cooler. Furthermore, it may be provided alone or in addition to existing temperature control elements of the apparatus to perform the desired temperature control. As explained above, the temperature control element may either be controlled by a central (electronic) control unit of the apparatus or by a separate control unit of the shielding gas control system. Also, it may be generally controlled to selectively adjust the amount of exchanged heat between the temperature control element and the shielding gas according to current needs.

In one example, the temperature control element is configured as a heat exchanger. Said heat exchanger may in a generally known manner carry a heat exchange medium, such as a cooling and/or heating liquid or a coolant/refrigerant. Furthermore, it may interact with the shielding gas so as to achieve a heat exchange between the shielding gas and said medium, thus providing heating and/or cooling of said gas. Preferably, the heat exchanger is configured as a heat exchanger coil which is wound around a gas line carrying the shielding gas.

The shielding gas control system further comprises a line circuit connecting a first and second temperature control element, the second temperature control element being configured to remove heat from the shielding gas and the line circuit being configured to transfer at least part of said heat to the first temperature control element for heating the shielding gas. The line circuit may comprise tubes and/or connecting lines between said temperature control elements. Moreover, the line circuit may comprise a suitable heat exchange medium, such as a heating liquid, to transfer the heat between the temperature control elements as well as to and from the shielding gas. In a generally known manner, the line circuit may further comprise components such as a pump or compressor for creating a desired flow of the heat exchange medium through the line circuit and, preferably, a circulation of said medium in the circuit.

The second temperature control element is positioned close to an exit site of the shielding gas from the process chamber. The first temperature control element, on the other hand, is positioned close an entry site of the shielding gas to said process chamber. This way, heat can be at least partially recycled within the line circuit to selectively heat up the shielding gas prior to entering the process chamber. Similarly, if a cooling of the shielding gas prior to entering the process chamber is desired, the second temperature control element is positioned close the entry site and the first temperature control element is positioned close to the exit site.

According to a preferred embodiment, the shielding gas control system is further adapted to control the flow rate of the shielding gas to and/or from the process chamber. For doing so, the shielding gas control system may provide control signals for prompting existing actuators of the apparatus, and in particular of the gas supply system, to adjust the flow rate in a desired manner. For example, the shielding gas control system may prompt a flow generating means of the gas supply system, such as a compressor, to vary the flow rate in a desired manner. Likewise, valves of said gas supply system may be controlled to open and/or close or vary their opening degrees due to signals from the shielding gas control system. Alternatively or in addition thereto, the gas control system may comprise own actuators for adjusting the flow rate, such as an additional valve which may be arranged close to or at an entry site of the shielding gas to the gas chamber.

By varying said flow rate in addition to controlling the temperature of the shielding gas, and additional parameter is available for controlling the temperature in the process chamber and especially of the workpiece being formed therein. For example, increasing the flow rate at low temperatures of the shielding gas may help to promote cooling, whereas decreased flow rates may be beneficial for heating the workpiece.

According to one example, the shielding gas control system is adapted to controlling the temperature and/or flow rate of the shielding gas in response to at least one process parameter. For doing so, the apparatus may further comprise a control unit that is adapted to setting and/or monitoring at least one process parameter. As previously explained, said control unit may be formed or be comprised by a central control unit of apparatus and, preferably, at least partially control the shielding gas control system. In case the shielding gas control system is configured as a separate module, the control unit may also be directly integrated in said module. Moreover, the control unit may be connected in a well-known manner to sensors of the apparatus to determine relevant process parameters and/or to actuators of the apparatus to set such process parameters. Also, the control unit may be configured to determine such process parameters from an operating program of the apparatus, such as a CAD/CAM- or NC-program for producing the current workpiece. These information may be used by the shielding gas control system to set an appropriate amount of heating/cooling of the shielding gas as well as adjusting the flow rate thereof to meet current needs.

The process parameter may generally relate to any process parameters defined by or relating to the apparatus and/or to any dynamically changing parameters of the process and/or workpiece, such as the current build height of the workpiece being produced by the apparatus. Said build height may relate to a vertical or orthogonal height of the workpiece relative to the carrier, i.e., a distance of a most recently formed workpiece layer to said carrier, and may increase with every new workpiece layer being formed during the production process. A respective process parameter for indicating the build height may be derived, for example, from determining a position of a vertical moving axis of the carrier. Also, a number of workpiece layers having been irradiated by the irradiation device or an elapsed build time of the workpiece may be considered. Both of these options can equally allow to infer on a current build height of the workpiece.

Moreover, if one of said process parameters indicates an increasing height of the workpiece, the shielding gas control system may detect a risk of an unduly high temperature gradient being formed in the workpiece. This relates in particular to a case in which an additional heating unit is provided at the carrier, the heat of which being increasingly incapable of reaching upper regions of the workpiece remote from said carrier. Accordingly, the shielding gas control system may initiate suitable countermeasures, such as increasing the shielding gas temperature in or prior to entering the process chamber or reducing a flow rate thereof.

Furthermore, the process parameter may indicate a measured or estimated heat distribution within the workpiece. Such estimated heat distributions may be pre-stored or calculated on the basis of simulations. If the shielding gas control system detects, for example based on a current build height of the workpiece, that a region or layer of the workpiece is reached which is marked by an (estimated) critical temperature or temperature gradient, it can adjust the temperature and/or flow rate of the shielding gas accordingly.

According to a further aspect, the shielding gas control system is adapted to control the temperature and/or flow rate of the shielding gas in response to at least one workpiece parameter relating to the workpiece to be produced by the apparatus. Such workpiece parameters may generally relate to any parameter of the finished workpiece or parameters which remain substantially stable until production is completed, such as a cross-sectional area of a currently produced workpiece layer. Furthermore, for determining said workpiece parameters, the apparatus may comprise a control unit that is adapted to storing and/or determining such workpiece parameters. Again, the control unit may be configured according to any of the aspects discussed above. Furthermore, the workpiece parameters may be stored in or determined from any suitable data format, such as NC- or CAD-data, wherein said determination may involve calculations based on these data. Likewise, the workpiece parameters may be pre-stored as a discrete number in any suitable format.

In this context, the workpiece parameter may indicate a workpiece shape, and in particular a cross-sectional shape, and/or at least one workpiece dimension, such as the workpiece height or width. The shape of the workpiece may relate to its overall three-dimensional shape or merely to a shape of its cross-section or the cross-sectional variations along its height. The height and/or width, on the other hand, may be defined relative to the carrier, wherein the height can be defined vertically or orthogonally relative to said carrier (cf. build height discussed above). The width can be defined as extending substantially in parallel to the carrier and/or orthogonally to the height. Thus, the width may generally define a material thickness transverse to the workpiece's height or, in other words, a width of a cross-section of the workpiece. In one example, the width relates to the workpiece dimension when viewed from an entry to an exit site of the shielding gas to and from the process chamber, or, in other words, the distance across the workpiece's cross-section along which the shielding gas streams.

Note that the control unit may update the workpiece parameter depending on a current production state, such as a current build height or a current workpiece layer being formed. This can be used, for example, to identify a suitable workpiece parameter relating to the layer being currently produced, such as the current workpiece cross-section along which the shielding gas will stream. Depending on the width, size, shape and/or area of said current workpiece cross-section, the shielding gas control system can adapt its settings accordingly.

When performing a control based on a workpiece parameter, the gas supply system may generally be configured to (in advance or during an ongoing production process) identify areas of the workpiece which are sensitive to accumulating excessive amounts of heat or are sensitive to cooling out very quickly. In other words, regions (i.e., layer sections) of the workpiece which are sensitive to creating undesired temperature gradients can be identified and the settings of the shielding gas control system can be adapted accordingly as soon as these regions or layers are reached during production. Specifically, if reaching a workpiece region which is prone to excessive heat accumulation, the shielding gas control system may decrease a temperature of the shielding gas supplied to the process chamber and/or increase the flow rate thereof.

According to a further embodiment, the apparatus further comprises a heating unit and/or cooling unit and the shielding gas control system can be adapted to control the temperature and/or flow rate of the shielding gas in response to an operating state of the heating and/or cooling unit. In other words, the shielding gas control system may be adapted to adjust its settings based on the settings of additional heating and/or cooling units being provided in the apparatus. For example, if additional heating is already provided by a respective unit, further heating of the shielding gas by means of the shielding gas control unit may be controlled in dependence on said already provided heat.

In one example, the heating unit is provided in form of a carrier heating unit as discussed above. Such heating units may be attached to or integrated in the carrier to transfer heat to the workpiece.

Of course, it can also be considered to (additionally or alternatively) control such additional heating and/or cooling units of the apparatus based on current settings of the shielding gas control system.

We further describe a shielding gas control system (not falling within the scope of the invention) for an apparatus, said apparatus being adapted to produce a three-dimensional workpiece and said apparatus comprising:
- a carrier being arranged in a process chamber of the apparatus and adapted to receive a layer of raw material powder;
- an irradiation device for selectively irradiating electromagnetic or particle radiation onto the raw material powder applied onto the carrier in order to produce the workpiece from said raw material powder by an additive layer construction method; and
- a shielding gas supply system adapted to supply a shielding gas to the process chamber,
wherein the shielding gas control system is adapted to control the temperature and/or flow rate of the shielding gas in accordance with one of the above discussed aspects. According to this solution, the shielding gas control system may be provided as a separately configured and/or separately mountable module which is generally beneficial for retrofitting existing apparatuses.

Furthermore, the invention relates to a method of operating an apparatus, said apparatus being adapted to produce a three-dimensional workpiece and said apparatus comprising:
- a carrier being arranged in a process chamber of the apparatus and adapted to receive a layer of raw material powder;
- an irradiation device for selectively irradiating electromagnetic or particle radiation onto the raw material powder applied onto the carrier in order to produce the workpiece from said raw material powder by an additive layer construction method;
- a shielding gas supply system adapted to supply a shielding gas to the process chamber; and
- a shielding gas control system that is adapted to control the temperature of the shielding gas,
wherein the shielding gas control system comprises a line circuit connecting a first and second temperature control element, wherein the first and second temperature control elements are arranged adjacent to an entry site of the shielding gas to the process chamber and an exit site of the shielding gas from the process chamber, respectively, wherein the method comprises the step of controlling the temperature of the shielding gas by removing heat, using the second temperature control element, from the shielding gas and by transferring at least part of said heat, using the line circuit, to the first temperature control element for heating the shielding gas and/or (ii) the flow rate of the shielding gas. Specifically, the method according to the present invention may involve any additional step to provide any of the functions and effects as well as realise any of the operating states and control activities of the above discussed apparatus and, in particular, of the shielding gas control system.

For example, the method may include a step of increasing a shielding gas temperature in accordance with an increasing build height of the workpiece. This may generally take place in a stepwise, continuous and/or proportional manner or involve only a single adjustment upon surpassing a predefined threshold value of said build height. Likewise, the method may include a step of decreasing a shielding gas temperature in accordance with increasing workpiece dimensions, in particular cross-sectional dimensions, or if layer sections with an estimated high heat accumulation are reached.

Preferred embodiments of the invention are explained in greater detail below with reference to the accompanying schematic drawings, in which:
- Figure 1: shows a schematic representation of an apparatus for producing three-dimensional workpieces according to an embodiment of the invention,
- Figure 2A-C: show schematic views of a workpiece being produced by the apparatus of figure 1 under different operating conditions.

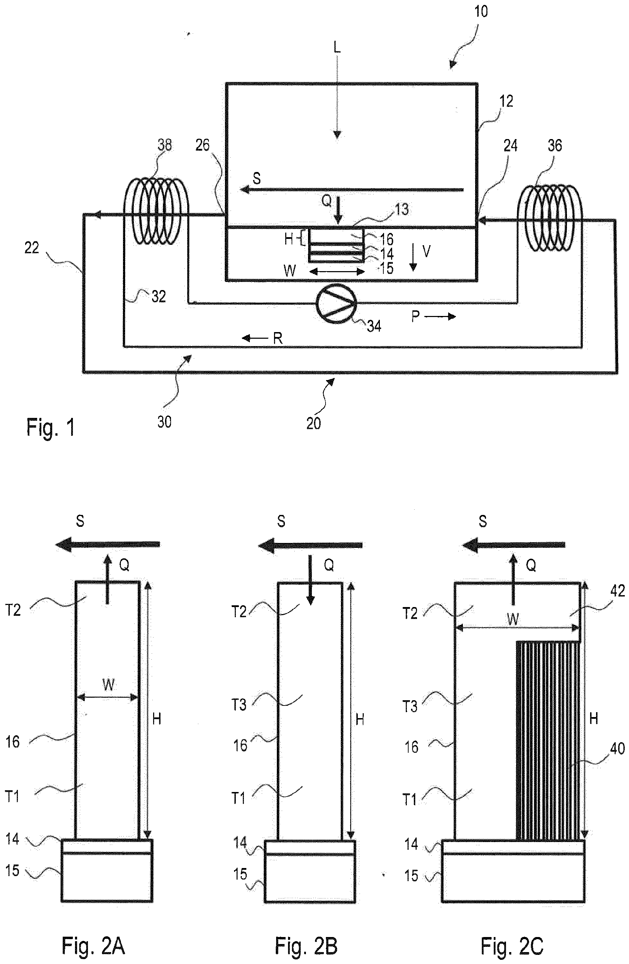

Figure 1 shows an apparatus 10 for producing three-dimensional workpieces 16 by powder bed fusion. Generally, only selective components of the apparatus 10 are presently depicted and the apparatus 10 comprises further standard components of this as such known category of device to produce three-dimensional workpieces 16 by selective laser melting.

As can be seen in figure 1, the apparatus 10 comprises a process chamber 12. The process chamber 12 is sealable against the ambient atmosphere, i.e. against the environment surrounding the process chamber 12. A powder application device (not shown), which is disposed in the process chamber 12, serves to apply a raw material powder 13 onto a carrier 14. The carrier 14 is designed to be displaceable in a vertical direction V so that, with increasing build height H of a workpiece 16, as it is built up in layers from the raw material powder 13 on the carrier 14, the carrier 14 can be moved downwards. For forming said layers, the apparatus 10 further comprises a non-depicted irradiation device for selectively irradiating a laser radiation L onto the layer of raw material powder 13 applied onto the carrier 14. Also, a carrier heating unit 15 is provided which is attached to an underside of the carrier 14 to provide additional heating to the workpiece 16 from below.

In the state depicted in figure 1, the production process has been ongoing for a certain time so that a block-shaped workpiece 16 has already been partially formed on the carrier 14. The workpiece 16 is thus marked by a current build height H extending vertically from an upper surface of the carrier 14. Furthermore, the workpiece 16 is marked by a width W extending along said upper surface of the carrier 14 and orthogonally to the build height H.

The apparatus 10 further comprises a shielding gas supply system 20. Again, only selective components of said shielding gas supply system 20 are presently depicted, said system 20 being otherwise configured according to known solutions. As can be gathered from figure 1, the shielding gas supply system 20 comprises a line circuit 22 for guiding shielding gas to an entry site 24 to the process chamber 12. Said entry site 24 is configured as a simple aperture in an outer sidewall of the process chamber 12. Furthermore, the line circuit 22 extends from an exit site 26 from the process chamber 12, which again is configured as a simple aperture. This way, shielding gas can be supplied to the entry site 24 of the process chamber 12, stream through the process chamber 12 as indicated by arrow S, and then leave the process chamber 12 through the exit site 26 by being collected in the line circuit 22. Following that, the shielding gas is transported through the line circuit 22 by means of a non-illustrated compressor to again reach the entry site 24. Thus, an overall circulating movement of the shielding gas through the apparatus 10 is generated.

The apparatus 10 further comprises a shielding gas control system 30, again only selective components of which are presently displayed. The shielding gas control system 30 comprises a line circuit 32 being configured separately from the line circuit 22 of the gas supply system 20 and accommodating a heat exchange medium. Said heat exchange medium is circulated in the line circuit 32 by means of a pump 34 (alternatively, a compressor may be used). Furthermore, the line circuit 32 comprises two temperature control elements in form of a first heat exchanger coil 36 and a second heat exchanger coil 38 which are connected by means of the line circuit 32. The first heat exchanger coil 36 is arranged near the entry site 24 to the process chamber 12 and accommodates a section of the line circuit 22 of the gas supply system 20 leading to said entry site 24 (i.e., is wound around a respective section of the gas supply line circuit 22). The second heat exchanger coil 38, on the other hand, is arranged near the exit site 26 from the process chamber 12 and similarly accommodates a section of the line circuit 22 of the gas supply system 20 extending from said exit site 26. Note, however, that the heat exchanger coils 36,38 can also be positioned further remote from the entry and/or exit sites 24,26 and may e.g. be positioned depending on the heat-sensitivity of adjacent devices and structures.

As indicated by arrow P, the pump 34 causes a circulation of the heat exchange medium in an opposite direction compared to the shielding gas stream S from the second heat exchanger coil 38 to the first heat exchanger coil 36. Specifically, the heat exchange medium is made to circulate from the second to the first heat exchanger coil 38, 36 over a shorter distance compared to the opposite flow from the first to the second heat exchanger coil 36, 38 along arrow R.

In the depicted embodiment, the first heat exchanger coil 36 acts as a heating unit for the shielding gas in line circuit 22 and the second heat exchanger coil 38 acts as a cooling unit for said shielding gas. More precisely, during operation of the apparatus 10, the first heat exchanger coil 36 heats the shielding gas travelling through said coil 36 in the line circuit 22 prior to entering the gas chamber 12 via entry site 24. Following that, the shielding gas streams towards the exit site 26 along arrow S. As indicated by arrow Q, the shielding gas transfers part of its heat to the workpiece 16 during this process which, at least on its upper surface facing away from the carrier 14 (i.e., at its most recently produced layer), has a temperature which is lower than that of the shielding gas. The shielding gas thus cools down when streaming through the process chamber 12 while the workpiece 16 heats up. Consequently, the shielding gas reaches the exit site 26 and the second heat exchanger coil 38 at a lower temperature compared to its previous temperature at the entry site 24.

Following that, the shielding gas travels in the line circuit 22 through the second heat exchanger coil 38. Said coil 38 removes remaining excess heat from the shielding gas by means of the heat exchange medium in the line circuit 32 of the shielding gas control system 30. Specifically, in the second heat exchanger coil 38, the heat exchange medium is heated up by absorbing heat from the shielding gas to then transfer said heat to the first heat exchanger coil 36 by being circulated through the line circuit 32 via the pump 34. During this process, the pump 34 may supply additional heat to the heat exchange medium by means of an integrated heating unit. This may in particular be necessary during start-up of the apparatus 10.

After heating the shielding gas when flowing through the first heat exchanger coil 36, the heat exchange medium has cooled down again and circulates back to the second heat exchanger coil 38 along arrow R. Due to having cooled down, it can then provide the desired cooling effect in the second heat exchanger coil 38. Note that the line circuit 32 comprises a non-depicted cooling unit along arrow R that can selectively be activated to reduce the temperature of the heat exchange medium prior to reaching the second heat exchanger coil 38. This helps to increase the desired cooling effect.

The shielding gas control system 30 further comprises a non-depicted control unit for regulating the temperature of the shielding gas by means of the first and second heat exchanger coils 36, 38. For doing so, the flow rate of the heat exchange medium through the line circuit 32 can be adjusted, e.g. via the pump 34. Likewise, the settings of the additional heating and cooling units provided in said line circuit 32 can be adjusted. Furthermore, the control unit of the shielding gas control system 30 can generate control signals for the non-depicted compressor of the shielding gas supply system 20 for adjusting a flow rate of the shielding gas through the process chamber 12 along arrow S. Overall, the shielding gas control system 30 can thus selectively increase or decrease the temperature of the shielding gas as well as its flow rate according to given needs.

Examples of a temperature control by means of the shielding gas control system 30 will now be explained with reference to figures 2A-C. Figure 2A shows partial views of the carrier 14, the workpiece 16 being formed thereon as well as the carrier heating unit 15 as explained with reference to figure 1. Furthermore, the current building height H and width W of the workpiece 16 are again indicated. During production of the workpiece 16, the carrier heating unit 15 provides heat from below, so that the workpiece 16 has a comparatively high temperature T1 near the carrier 14. This temperature decreases if moving further away from the carrier 14 along the build height H as indicated by temperature T2 in figure 2A. Accordingly, a temperature gradient (T1>T2) is formed in the workpiece 16, said temperature gradient increasing with an increasing build height H. Note that even though the carrier heating unit 15 contributes to a temperature gradient being formed in the workpiece 16, it still limits said temperature gradient compared to a situation without any additional heating from below and the only heat being transferred to the workpiece 16 by means of the laser irradiation L.

In figure 2A, the shielding gas control system 30 operates in an idle mode and does not perform any dedicated temperature control of the shielding gas. Therefore, the shielding gas streaming along arrow S, which upon entering the gas chamber 12 through the entry site 24 of figure 1 has approximately room temperature, will actually pick up additional heat from the workpiece 16 as indicated by arrow Q. This means, first of all, that the shielding gas heats up when streaming through the process chamber 12. In addition, the temperature T2 of the workpiece 16 near its upper end remote from the carrier 14 will even further decrease, thus increasing the temperature gradient within the workpiece 16. This may lead to significant internal stresses in the workpiece 16, thus diminishing product quality.

Figure 2B, to the contrary, depicts a state in which the shielding gas streaming along arrow S is temperature-controlled by means of the shielding gas control system 30. Specifically, as described with reference to figure 1, the shielding gas is now heated up prior to entering the process chamber 12. Again, the carrier heating unit 15 is provided which increases a temperature T1 of the workpiece near said carrier 14. Yet, the shielding gas control system 30 now controls the temperature of the shielding gas to be above the temperature T2 near the upper end of the workpiece 16 (i.e., near its currently produced layer).

Suitable temperature values for the shielding gas for being above said workpiece temperature T2 can generally be previously determined, for example, with help of experiments, simulations or calculations. Also, they can be dynamically calculated, e.g. based on the current build height H.

As a result, heat is transferred from said shielding gas to the workpiece 16 as indicated by arrow Q. First of all, this means that the shielding gas cools down when streaming through the process chamber 12 (cf. discussion of figure 1 above). Second of all, however, this means that the upper end of the workpiece 16 is now deliberately heated by means of said shielding gas, thus increasing the temperature T2 of the workpiece 16 in this region as compared to the situation in figure 2A. This way, the temperature gradient (T1>T2) within the workpiece 16 is significantly decreased, thus limiting internal stresses.

Consequently, a temperature T3 in the middle part along the build height H of the workpiece 16 is now actually lower than the temperatures T1 and T2 near the lower and upper ends. The differences between said temperatures T1, T2 and T3 are, however, much smaller compared to the non-temperature-controlled situation of figure 2A, thus leading to overall smaller temperature gradients being formed within the workpiece 16.

Note that in case of figure 2B, the shielding gas control system 30 further increases the temperature of the shielding gas based on the continuously increasing build height H. This helps to make up for the decreasing amount of heat from the carrier heating unit 15 that reaches the upper region of the workpiece 16 at larger build heights H (cf. discussion of figure 2A).

Figure 2C depicts a case in which a different workpiece 16 is produced, said workpiece 16 requiring cooling by means of the shielding gas. Again, the workpiece 16 is formed on a carrier 14 which is heated from below by means of a carrier heating unit 15. Similar to above, this leads to a locally increased temperature T1 of the workpiece 16 near the carrier 14. Yet, in the depicted state, the workpiece 10 further comprises support structures 40. Such support structures 40 are well known in selective laser melting and help to stabilise a workpiece during production. Also, they may generally be provided for transferring heat away from upper workpiece layers and towards the carrier 14. After the production is completed, the supports are typically removed from the workpiece 16.

As can be gathered from figure 2C, the support structures 40 are integrally formed with and support an overhanging projection 42 of the workpiece 16. Said projection 42 locally increases the width W and thus the cross-section of the workpiece 42. This leads to a locally increased heat transfer from the laser irradiation L to the workpiece 16 when producing the layers of the projection 42 since the amount of absorbed irradiation L increases at larger cross-sections. Accordingly, the temperature T1/T2 difference along the build height H of the workpiece 16 may actually be acceptable.

Yet, this is only the case as long as the support structures 40 help to equalise the temperature gradient between these regions of the workpiece 16. Specifically, the support structures 40 have to be designed sufficiently large to ensure that the accumulated heat in the overhanging projection 42 is conducted to cooler regions of the workpiece 16, such as its middle part. This means that if the support structures were not present or dimensioned too small, the temperature T2 near the upper end of the workpiece 16 (i.e., near the currently produced layer) could be undesirably high. This may even lead to an opposite temperature gradient compared to figure 2A (T2>T1) or at least to an undesirably high temperature gradient compared to a temperature T3 in the middle part of the workpiece 16 (T2>T3).

In such cases, the shielding gas control system 30 will, in an opposite manner compared to figure 1, control the first heat exchanger coil 36 to operate as a cooling unit. Consequently, the shielding gas enters the process chamber 12 at a reduced temperature compared to a temperature T2 at an upper end of the workpiece 16. Thus, when streaming along arrow S, the shielding gas picks up heat from said upper end as indicated by arrow Q in figure 2C. Consequently, the shielding gas temperature is raised when reaching the exit site 26 of the process chamber 12 compared to its temperature at the entry site 24. Additionally, the temperature T2 near the currently produced layer of the workpiece 16 is decreased, thus decreasing the temperature gradient compared to temperatures T3 and/or T1.

Note that it is very conceivable that such support structures 40 as depicted in figure 2C may be omitted altogether when producing the workpiece 16. This may be the case when repairing an already existing workpiece 16 (i.e., the support structures having already been removed during the initial production) or if omitting said support structures 40 for cost reasons. Yet, as shown above, the shielding gas control system 30 according to the invention is configured to prevent the formation of undesired temperature gradients even in case of such missing support structures 40 by cooling the shielding gas appropriately.

Furthermore, depending on the size, shape, width W and/or area of the cross-section of the projection 42 for a current building height H, the shielding gas control system 30 can generally adjust its settings appropriately. Specifically, cooling of the shielding gas prior to entering the process chamber 12 is increased with increasing cross-sectional dimensions of the workpiece 16, for example, in a stepwise manner when reaching the first layer for producing the projection 42.

## Claims

1. An apparatus (10) for producing a three-dimensional workpiece (16),
said apparatus (10) comprising:
- a carrier (14) being arranged in a process chamber (12) of the apparatus (10) and adapted to receive a layer of raw material powder (13);
- an irradiation device for selectively irradiating electromagnetic or particle radiation onto the raw material powder (13) applied onto the carrier (14) in order to produce the workpiece (16) from said raw material powder (13) by an additive layer construction method; and
- a shielding gas supply system (20) adapted to supply a shielding gas to the process chamber (12),
wherein the apparatus further comprises a shielding gas control system (30) that is adapted to control the temperature of the shielding gas,
**characterized in that** the shielding gas control system (30) comprises a line circuit (32) connecting a first and second temperature control element (36, 38), the second temperature control element (38) being configured to remove heat from the shielding gas and the line circuit (32) being configured to transfer at least part of said heat to the first temperature control element (36) for heating the shielding gas, wherein the first and second temperature control elements are arranged adjacent to an entry site of the shielding gas to the process chamber (12) and an exit site of the shielding gas from the process chamber (12), respectively.

2. The apparatus (10) according to claim 1,
wherein the shielding gas control system (30) is adapted to control the temperature of the shielding gas prior to entering the process chamber (12) and/or in the process chamber (12) and/or after leaving the process chamber (12).

3. The apparatus (10) according to one of the preceding claims,
wherein said first and second temperature control elements are configured as heat exchangers (36, 38).

4. The apparatus (10) according to one of the preceding claims,
wherein the shielding gas control system (30) is further adapted to control the flow rate of the shielding gas to and/or from the process chamber (12).

5. The apparatus (10) according to one of the preceding claims,
wherein the shielding gas control system (30) is adapted to control the temperature and/or flow rate of the shielding gas in response to at least one process parameter relating to the apparatus (10) and/or to a dynamically changing parameter of the process for producing the three-dimensional workpiece (16).

6. The apparatus (10) according to claim 5,
wherein said process parameter indicates a build height (H) of the workpiece (16) and, preferably, wherein the shielding gas control system (30) is adapted to raise the temperature of the shielding gas with an increasing build height (H).

7. The apparatus (10) according to one of the preceding claims,
wherein the shielding gas control system (30) is adapted to control the temperature and/or flow rate of the shielding gas in response to at least one workpiece parameter relating to the workpiece (16) to be produced by the apparatus (10).

8. The apparatus (10) according to claim 7,
wherein said workpiece parameter indicates the workpiece shape, and in particular a cross-sectional shape, and/or at least one workpiece dimension, such as the workpiece height or width (W).

9. The apparatus (10) according to one of the preceding claims,
wherein the apparatus (10) further comprises a heating unit (15) and/or cooling unit and, preferably, wherein the shielding gas control system (30) is adapted to control the temperature and/or flow rate of the shielding gas in response to an operating state of the heating unit (15) and/or cooling unit.

10. The apparatus (10) according to claim 9,
wherein the apparatus (10) further comprises the heating unit (15), said heating unit (15) being adapted to heat the carrier (14).

11. A method of operating an apparatus (10), said apparatus (10) being adapted to producing a three-dimensional workpiece (16) and said apparatus (10) comprising:
- a carrier (14) being arranged in a process chamber (12) of the apparatus (10) and adapted to receive a layer of raw material powder (13);
- an irradiation device (18) for selectively irradiating electromagnetic or particle radiation onto the raw material powder (13) applied onto the carrier (14) in order to produce the workpiece (16) from said raw material powder (13) by an additive layer construction method;
- a shielding gas supply system (20) adapted to supply a shielding gas to the process chamber (12); and
- a shielding gas control system (30) that is adapted to control the temperature of the shielding gas,
wherein the shielding gas control system (30) comprises a line circuit (32) connecting a first and second temperature control element (36, 38), wherein the first and second temperature control elements are arranged adjacent to an entry site of the shielding gas to the process chamber (12) and an exit site of the shielding gas from the process chamber (12), respectively,
wherein the method comprises controlling (i) the temperature of the shielding gas by removing heat, using the second temperature control element (38), from the shielding gas and by transferring at least part of said heat, using the line circuit (32), to the first temperature control element (36) for heating the shielding gas and/or (ii) the flow rate of the shielding gas.

## Patentansprüche

1. Vorrichtung (10) zum Erzeugen eines dreidimensionalen Werkstücks (16), wobei die Vorrichtung (10) umfasst:
- einen Träger (14), der in einer Prozesskammer (12) der Vorrichtung (10) angeordnet und dazu eingerichtet ist, eine Rohstoffpulverschicht (13) aufzunehmen;
- eine Bestrahlungseinrichtung zum selektiven Abstrahlen von elektromagnetischer Strahlung oder Partikelstrahlung auf das auf den Träger (14) aufgebrachte Rohstoffpulver (13), um durch ein additives Schichtbauverfahren das Werkstück (16) aus dem Rohstoffpulver (13) zu erzeugen; und
- ein Schutzgaszufuhrsystem (20), das dazu eingerichtet ist, der Prozesskammer (12) ein Schutzgas zuzuführen,
wobei die Vorrichtung ferner ein Schutzgassteuersystem (30) umfasst, das dazu eingerichtet ist, die Temperatur des Schutzgases zu steuern,
**dadurch gekennzeichnet, dass** das Schutzgassteuersystem (30) ein Leitungssystem (32) umfasst, das ein erstes und ein zweites Temperatursteuerelement (36, 38) verbindet, wobei das zweite Temperatursteuerelement (38) dazu eingerichtet ist, Wärme von dem Schutzgas und dem Leitungssystem (32) abzuführen, welches dazu eingerichtet ist, zumindest einen Teil dieser Wärme an das erste Temperatursteuerelement (36) zu übertragen, um das Schutzgas aufzuheizen, wobei das erste und das zweite Temperatursteuerelement benachbart zu einem Einlassort des Schutzgases in die Prozesskammer (14) bzw. einem Auslassort des Schutzgases aus der Prozesskammer (12) angeordnet sind.

2. Vorrichtung (10) nach Anspruch 1,
wobei das Schutzgassteuersystem (30) dazu eingerichtet ist, die Temperatur des Schutzgases vor dem Eintritt in die Prozesskammer (12) und/oder in der Prozesskammer (12) und/oder nach dem Austritt aus der Prozesskammer (12) zu steuern.

3. Vorrichtung (10) nach einem der vorangehenden Ansprüche,
wobei das erste und das zweite Temperatursteuerelement als Wärmetauscher (36, 38) ausgebildet sind.

4. Vorrichtung (10) nach einem der vorangehenden Ansprüche,
wobei das Schutzgassteuersystem (30) ferner dazu eingerichtet ist, die Strömungsrate des Schutzgases zu der und/oder von der Prozesskammer (12) zu steuern.

5. Vorrichtung (10) nach einem der vorangehenden Ansprüche,
wobei das Schutzgassteuersystem (30) dazu eingerichtet ist, die Temperatur und/oder die Strömungsrate des Schutzgases in Reaktion auf mindestens einen mit der Vorrichtung (10) zusammenhängenden Prozessparameter und/oder einen sich dynamisch verändernden Parameter des Prozesses zur Erzeugung des dreidimensionalen Werkstücks (16) zu steuern.

6. Vorrichtung (10) nach Anspruch 5,
wobei der Prozessparameter eine Bauhöhe (H) des Werkstücks (16) anzeigt und wobei das Schutzgassteuersystem (30) vorzugsweise dazu eingerichtet ist, die Temperatur des Schutzgases mit zunehmender Bauhöhe (H) zu erhöhen.

7. Vorrichtung (10) nach einem der vorangehenden Ansprüche,
wobei das Schutzgassteuersystem (30) dazu eingerichtet ist, die Temperatur und/oder die Strömungsrate des Schutzgases in Reaktion auf einen Werkstückparameter zu steuern, der mit dem mittels der Vorrichtung (10) zu erzeugenden Werkstücks (16) zusammenhängt.

8. Vorrichtung (10) nach Anspruch 7,
wobei der Werkstückparameter die Werkstückform und insbesondere eine Querschnittsform und/oder mindestens eine Werkstückdimension, wie zum Beispiel die Werkstückhöhe oder -breite (W) anzeigt.

9. Vorrichtung (10) nach einem der vorangehenden Ansprüche,
wobei die Vorrichtung (10) ferner eine Heizeinheit (15) und/oder eine Kühleinheit umfasst und wobei das Schutzgassteuersystem (30) vorzugsweise dazu eingerichtet ist, die Temperatur und/oder die Strömungsrate des Schutzgases in Reaktion auf einen Betriebszustand der Heizeinheit (15) und/oder der Kühleinheit zu steuern.

10. Vorrichtung (10) nach Anspruch 9,
wobei die Vorrichtung (10) ferner die Heizeinheit (15) umfasst, wobei die Heizeinheit (15) dazu eingerichtet ist, den Träger (14) zu heizen.

11. Verfahren zum Betreiben einer Vorrichtung (10), wobei die Vorrichtung (10) dazu eingerichtet ist, ein dreidimensionales Werkstück (16) zu erzeugen und die Vorrichtung (10) umfasst:
- einen Träger (14), der in einer Prozesskammer (12) der Vorrichtung (10) angeordnet und dazu eingerichtet ist, eine Rohstoffpulverschicht (13) aufzunehmen;
- eine Bestrahlungseinrichtung zum selektiven Abstrahlen von elektromagnetischer Strahlung oder Partikelstrahlung auf das auf den Träger (14) aufgebrachte Rohstoffpulver (13), um durch ein additives Schichtbauverfahren das Werkstück (16) aus dem Rohstoffpulver (13) zu erzeugen;
- ein Schutzgaszufuhrsystem (20), das dazu eingerichtet ist, der Prozesskammer (12) ein Schutzgas zuzuführen; und
- ein Schutzgassteuersystem (30) umfasst, das dazu eingerichtet ist, die Temperatur des Schutzgases zu steuern,
wobei das Schutzgassteuersystem (30) ein Leitungssystem (32) umfasst, das ein erstes und ein zweites Temperatursteuerelement (36, 38) verbindet, wobei das erste und das zweite Temperatursteuerelement benachbart zu einem Einlassort des Schutzgases in die Prozesskammer (14) bzw. einem Auslassort des Schutzgases aus der Prozesskammer (12) angeordnet sind,
wobei das Verfahren das Steuern (i) der Temperatur des Schutzgases durch Abführen von Wärme von dem Schutzgas unter Verwendung des zweiten Temperatursteuerelement (38) und durch Übertragen zumindest eines Teils dieser Wärme an das erste Temperatursteuerelement (36) unter Verwendung des Leitungssystems (32) zum Heizen des Schutzgases und/oder (ii) der Strömungsrate des Schutzgases umfasst.

## Revendications

1. Appareil (10) pour produire une pièce d'usinage tridimensionnelle (16), ledit appareil (10) comprenant :
- un support (14) étant agencé dans une chambre de traitement (12) de l'appareil (10) et adapté à recevoir une couche de poudre de matière brute (13) ;
- un dispositif d'irradiation pour sélectivement irradier un rayonnement électromagnétique ou particulaire sur la poudre de matière brute (13) appliquée sur le support (14) afin de produire la pièce d'usinage (16) à partir de ladite poudre de matière brute (13) par un procédé de construction de couches additif ; et
- un système (20) de fourniture de gaz de protection adapté à fournir un gaz de protection dans la chambre de traitement (12),
dans lequel l'appareil comprend en outre un système (30) de commande de gaz de protection qui est adapté à commander la température du gaz de protection,
**caractérisé en ce que** le système (30) de commande de gaz de protection comprend un circuit de ligne (32) connectant un premier et un deuxième élément (36, 38) de commande de température, le deuxième élément (38) de commande de température étant configuré pour éliminer de la chaleur du gaz de protection et le circuit de ligne (32) étant configuré pour transférer au moins une partie de ladite chaleur jusqu'au premier élément (36) de commande de température pour chauffer le gaz de protection, dans lequel les premier et deuxième éléments de commande de température sont agencés adjacents à un site d'entrée du gaz de protection vers la chambre de traitement (12) et un site de sortie du gaz de protection de la chambre de traitement (12), respectivement.

2. Appareil (10) selon la revendication 1,
dans lequel le système (30) de commande de gaz de protection est adapté à commander la température du gaz de protection avant l'entrée dans la chambre de traitement (12) et/ou dans la chambre de traitement (12) et/ou après la sortie de la chambre de traitement (12).

3. Appareil (10) selon l'une des revendications précédentes,
dans lequel lesdits premier et deuxième éléments de commande de température sont configurés comme des échangeurs de chaleur (36, 38).

4. Appareil (10) selon l'une des revendications précédentes,
dans lequel le système (30) de commande de gaz de protection est en outre adapté à commander le débit du gaz de protection vers la et/ou depuis la chambre de traitement (12).

5. Appareil (10) selon l'une des revendications précédentes,
dans lequel le système (30) de commande de gaz de protection est adapté à commander la température et/ou le débit du gaz de protection en réponse à au moins un paramètre de processus se rapportant à l'appareil (10) et/ou à un paramètre changeant dynamiquement du processus pour produire la pièce d'usinage tridimensionnelle (16).

6. Appareil (10) selon la revendication 5,
dans lequel ledit paramètre de processus indique une hauteur (H) de construction de la pièce d'usinage (16) et, préférablement, dans lequel le système (30) de commande de gaz de protection est adapté à augmenter la température du gaz de protection avec une hauteur (H) de construction en augmentation.

7. Appareil (10) selon l'une des revendications précédentes,
dans lequel le système (30) de commande de gaz de protection est adapté à commander la température et/ou le débit du gaz de protection en réponse à au moins un paramètre de pièce d'usinage se rapportant à la pièce d'usinage (16) devant être produite par l'appareil (10).

8. Appareil (10) selon la revendication 7,
dans lequel ledit paramètre de pièce d'usinage indique la forme de pièce d'usinage, et en particulier une forme en coupe transversale, et/ou au moins une dimension de pièce d'usinage, telle que la hauteur ou la largeur (W) de pièce d'usinage.

9. Appareil (10) selon l'une des revendications précédentes,
dans lequel l'appareil (10) comprend en outre une unité (15) de chauffage et/ou une unité de refroidissement et, préférablement, dans lequel le système (30) de commande de gaz de protection est adapté à commander la température et/ou le débit du gaz de protection en réponse à un état opérationnel de l'unité (15) de chauffage et/ou de l'unité de refroidissement.

10. Appareil (10) selon la revendication 9,
dans lequel l'appareil (10) comprend en outre l'unité (15) de chauffage, ladite unité (15) de chauffage étant adaptée à chauffer le support (14).

11. Procédé de fonctionnement d'un appareil (10), ledit appareil (10) étant adapté à produire une pièce d'usinage tridimensionnelle (16) et ledit appareil comprenant :
- un support (14) étant agencé dans une chambre de traitement (12) de l'appareil (10) et adapté à recevoir une couche de poudre de matière brute (13) ;
- un dispositif (18) d'irradiation pour sélectivement irradier un rayonnement électromagnétique ou particulaire sur la poudre de matière brute (13) appliquée sur le support (14) afin de produire la pièce d'usinage (16) à partir de ladite poudre de matière brute (13) par un procédé de construction de couches additif ;
- un système (20) de fourniture de gaz de protection adapté à fournir un gaz de protection dans la chambre de traitement (12) ; et
- un système (30) de commande de gaz de protection qui est adapté à commander la température du gaz de protection,
dans lequel le système (30) de commande de gaz de protection comprend un circuit de ligne (32) connectant un premier et un deuxième élément (36, 38) de commande de température, dans lequel les premier et deuxième éléments de commande de température sont agencés adjacents à un site d'entrée du gaz de protection vers la chambre de traitement (12) et un site de sortie du gaz de protection de la chambre de traitement (12), respectivement,
dans lequel le procédé comprend la commande (i) de la température du gaz de protection en éliminant de la chaleur, en utilisant le deuxième élément (38) de commande de température, du gaz de protection et en transférant au moins une partie de ladite chaleur, en utilisant le circuit de ligne (32), jusqu'au premier élément (36) de commande de température pour chauffer le gaz de protection et/ou (ii) du débit du gaz de protection.
